# EUROPEAN PATENT APPLICATION

(11) **EP 4 568 198 A1**
(43) Date of publication of application: **11.06.2025**
(21) Application number: 22953490.4
(22) Date of filing: 02.08.2022
(51) Int. Cl.: H04L 27/00, H04W 8/24, G06F 16/248

(54) **COMMUNICATION METHODS AND APPARATUSES, AND COMMUNICATION DEVICE, STORAGE MEDIUM AND PROGRAM PRODUCT**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN); YOU, Xin, Dongguan, Guangdong 523860 (CN); LIN, Xue, Dongguan, Guangdong 523860 (CN)
(74) Representative: Ipside
(86) International application number: PCT/CN2022/109710
(87) International publication number: WO 2024/026677

(57) **Abstract**

Embodiments of the disclosure provide a communication method and apparatus, a communication device, a storage medium, and a program product, and relate to the field of communication technology. The method includes the following. A first device sends a first message to a second device, where the first message contains application model information related to a third device (320). In the above method, the application model information can be interacted between devices. For one thing, this helps synchronization of application model information between devices. For another, based on synchronized application model information, a control process associated with the application model information can be triggered. Therefore, the management and application of an application model in a communication system can be realized, and the performance of the communication system can be improved.

## Description

### TECHNICAL FIELD

Embodiments of the disclosure relate to the field of communication technology, and particularly to a communication method and apparatus, a communication device, a storage medium, and a program product.

### BACKGROUND

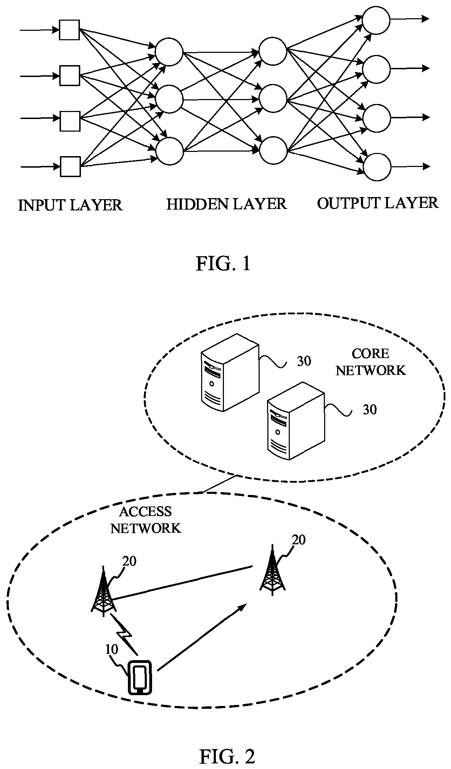

In recent years, researches on artificial intelligence (AI) and related achievements have achieved good results in many fields. At present, the AI has become a new way for people to try to solve and deal with problems. The neural network-based AI research is an extremely important type of many researches. A basic structure of a simple neural network includes an input layer, a hidden layer, and an output layer. As illustrated in FIG. 1, the input layer is responsible for data reception, the hidden layer is responsible for data processing, and a final result is generated at the output layer.

From the perspective of a standard protocol, an AI-related control process is not explicitly introduced in a current communication system. The application of the AI in the communication system mostly remains in an algorithm implementation aspect. For example, an AI/machine learning (ML) algorithm is used for resource scheduling and management of a network device. In other words, the AI is currently affecting the communication system in a form of algorithm implementation.

The use of an AI/ML model in the communication system has become a trend. An increasing number of research achievements show that the application of the AI/ML model can optimize specific communication functions. As various types of AI/ML models are applied to the communication system, how to manage information related to the AI/ML models is an urgent problem to be solved.

### SUMMARY

A communication method and apparatus, a communication device, a storage medium, and a program product are provided in embodiments of the disclosure. The technical solutions are as follows.

According to an aspect of embodiments of the disclosure, a communication method is provided. The method includes the following. A first device sends a first message to a second device, where the first message contains application model information related to a third device.

According to an aspect of embodiments of the disclosure, a communication method is provided. The method includes the following. A second device receives a first message sent by a first device, where the first message contains application model information related to a third device.

According to an aspect of embodiments of the disclosure, a communication apparatus is provided. The apparatus is disposed in a first device and includes a sending module. The sending module is configured to send a first message to a second device, where the first message contains application model information related to a third device.

According to an aspect of embodiments of the disclosure, a communication apparatus is provided. The apparatus is disposed in a second device and includes a receiving module. The receiving module is configured to receive a first message sent by a first device, where the first message contains application model information related to a third device.

According to an aspect of embodiments of the disclosure, a communication device is provided. The communication device includes a processor and a memory. The memory is configured to store a computer program. The processor is configured to execute the computer program, so as to implement the foregoing communication method performed by a first device or a second device.

According to an aspect of embodiments of the disclosure, a computer-readable storage medium is provided. The storage medium is configured to store a computer program. The computer program is configured to be executed by a processor, so as to implement the foregoing communication method performed by a first device or a second device.

According to an aspect of embodiments of the disclosure, a chip is provided. The chip includes a programmable logic circuit and/or program instructions. The chip is configured to, when running, implement the foregoing communication method performed by a first device or a second device.

According to an aspect of embodiments of the disclosure, a computer program product is provided. The computer program product includes computer instructions. The computer instructions are stored in a computer-readable storage medium and configured to be read and executed by a processor from the computer-readable storage medium, so as to implement the foregoing communication method performed by a first device or a second device.

The technical solutions provided in embodiments of the disclosure at least have the following beneficial effects.

The first device sends the first message to the second device, where the first message contains application model information related to a third device, thereby realizing interaction of the application model information between devices. For one thing, this helps synchronization of application model information between devices. For another, based on synchronized application model information, a control process associated with the application model information can be triggered. Therefore, the management and application of an application model in a communication system can be realized, and the performance of the communication system can be improved.

### BRIEF DESCRIPTION OF THE DRAWINGS

FIG. 1 is a schematic diagram of a basic structure of a neural network provided in the related art.
FIG. 2 is a schematic diagram of a network architecture provided in an embodiment of the disclosure.
FIG. 3 is a flow chart of a communication method provided in an embodiment of the disclosure.
FIG. 4 is a flow chart of a communication method provided in another embodiment of the disclosure.
FIG. 5 is a block diagram of a communication apparatus provided in an embodiment of the disclosure.
FIG. 6 is a block diagram of a communication apparatus provided in another embodiment of the disclosure.
FIG. 7 is a schematic structural diagram of a communication device provided in an embodiment of the disclosure.

### DETAILED DESCRIPTION

In order to make the objectives, technical solutions, and advantages of the disclosure clearer, embodiments of the disclosure will be described in further detail below with reference to the accompanying drawings.

The network architecture and service scenario described in embodiments of the disclosure are intended to describe the technical solutions of embodiments of the disclosure more clearly, and do not constitute limitation on the technical solutions provided in embodiments of the disclosure. Those of ordinary skill in the art can appreciate that, with evolution of network architectures and emergence of new service scenarios, for similar technical problems, the technical solutions provided in embodiments of the disclosure are also applicable.

The technical solutions of embodiments of the disclosure may be applied to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5th-generation (5G) communication system, or other communication systems.

Generally, a conventional communication system supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, or vehicle to everything (V2X) communication, etc. Embodiments of the disclosure can also be applied to these communication systems.

The communication system in embodiments of the disclosure may be applied to a carrier aggregation (CA) scenario, or may be applied to a dual connectivity (DC) scenario, or may be applied to a standalone (SA) network deployment scenario.

The communication system in embodiments of the disclosure is applicable to an unlicensed spectrum, and an unlicensed spectrum may be regarded as a shared spectrum. Alternatively, the communication system in embodiments of the disclosure is applicable to a licensed spectrum, and a licensed spectrum may be regarded as a non-shared spectrum.

The embodiments of the disclosure may be applied to an NTN system, or may be applied to a terrestrial network (TN) system.

Reference is made to FIG. 2 which is a schematic diagram of a network architecture provided in an embodiment of the disclosure. The network architecture may include a terminal device 10, an access-network device 20, and a core-network device 30.

The terminal device 10 may refer to a user equipment (UE), an access terminal, a subscriber unit, a subscriber station, a mobile station, a remote station, a remote terminal, a mobile device, a wireless communication device, a user agent, or a user device. In some embodiments, the terminal device 10 may also be a cellular telephone, a cordless telephone, a session initiation protocol (SIP) telephone, a wireless local loop (WLL) station, a personal digital assistant (PDA), various devices having wireless communication functions such as a handheld device, a computing device, or other processing devices connected to a wireless modem, an in-vehicle device, or a wearable device, a terminal device in a 5G system (5GS) or a terminal device in a future evolved public land mobile network (PLMN), etc., and embodiments of the disclosure are not limited in this regard. For the convenience of illustration, the foregoing devices are collectively referred to as "terminal device". The quantity of terminal devices 10 is generally multiple, and there may be one or more terminal devices 10 distributed in a cell managed by each access-network device 20. In embodiments of the disclosure, the terms "terminal device" and "UE" are usually used interchangeably, but the meaning thereof can be understood by those skilled in the art.

The access-network device 20 is a device deployed in an access network to provide wireless communication functions for the terminal device 10. The access-network device 20 may include various forms of macro base stations, micro base stations, relay stations, access points, etc. The names of a device having functions of the access-network device may be different in systems adopting different radio access technologies, which is, for example, referred to as a gNodeB or a gNB in a 5G NR system. With evolution of communication technology, the name "access-network device" may change. For the convenience of illustration, in embodiments of the disclosure, the foregoing apparatus for providing wireless communication functions for the terminal device 10 is collectively called "access-network device". In some embodiments, a communication relationship may be established between the terminal device 10 and the core-network device 30 via the access-network device 20. Exemplarily, in an LTE system, the access-network device 20 may be an evolved universal terrestrial radio access network (EUTRAN) or one or more eNodeBs in the EUTRAN. In a 5G NR system, the access-network device 20 may be a RAN or one or more gNBs in the RAN.

The core-network device 30 is a network element or device deployed in a core network. Main functions of the core-network device 30 are to provide a user connection, manage a user, complete service carrying, and act as a bearer network to provide an interface to an external network. For example, the core-network device in a 5G NR system may include network elements such as an access and mobility management function (AMF), a user plane function (UPF), and a session management function (SMF). In addition, the core-network device may be regarded as a functional entity, and one or more core-network devices may be deployed for a physical device.

In some embodiments, the access-network device 20 and the core-network device 30 communicate with each other with some air interface technology, such as an NG interface in a 5G NR system. The access-network device 20 and the terminal device 10 communicate with each other with some air interface technology, such as a UE-UTRAN (Uu) interface.

The "5G NR system" in embodiments of the disclosure may also be referred to as "5G system" or "NR system", but the meaning thereof can be understood by those skilled in the art. The technical solutions described in embodiments of the disclosure may be applied to an LTE system, or may be applied to a 5G NR system, or may be applied to a future evolved system of a 5G NR system, or may be applied to other communication systems such as a narrow band Internet of things (NB-IoT) system, and the disclosure is not limited in this regard.

In embodiments of the disclosure, the access-network device can serve a cell, and the terminal device communicates with the access-network device over a transmission resource (for example, a frequency domain resource, or referred to as spectrum resource) on a carrier used by the cell. The cell may be a cell corresponding to the access-network device (for example, a base station). The cell may belong to a macro base station, or may belong to a base station corresponding to a small cell. The small cell herein may include a metro cell, a micro cell, a pico cell, a femto cell, etc. These small cells are characterized by small coverage and low transmission power and are adapted to provide data transmission service with high-rate.

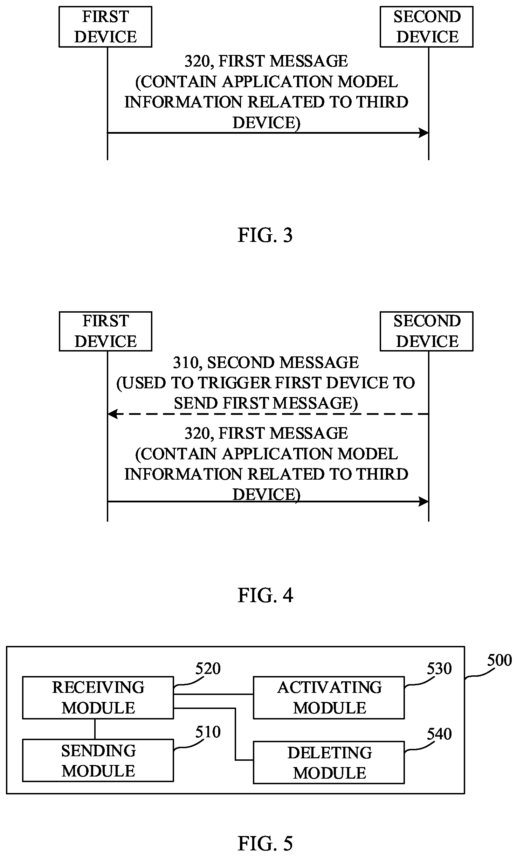

Reference is made to FIG. 3 which is a flow chart of a communication method provided in an embodiment of the disclosure. The method may be applicable to the network architecture illustrated in FIG. 1. The method may include an operation at 320 below.

At 320, a first device sends a first message to a second device, where the first message contains application model information related to a third device.

Accordingly, the second device receives the first message sent by the first device.

In some embodiments, an application model includes, but is not limited to, at least one of: an artificial intelligence (AI) model, a machine learning (ML) model, a supercomputing model, a neuron-like model, an authentication model, an encryption and decryption model, or a self-optimization model. Certainly, the above examples of the application model are merely exemplary and explanatory, and this disclosure is not limited thereto and may further include other types of application models.

In some embodiments, the application model information includes, but is not limited to, at least one of information 1, information 2, information 3, information 4, information 5, or information 6 below.

Information 1, identity information of at least one application model supported by the third device.

An application model supported by the third device may refer to an application model that can be run and/or used by the third device. Identity information of application models is used to distinguish and identify different application models. For example, the identity information of an application model may be information such as an identifier (ID), a sequence number, and a name of the application model, which is not limited in the disclosure.

In a possible implementation, the identity information of the at least one application model supported by the third device includes only identity information of at least one application model that is supported by the third device and corresponding model data of which is not stored in the third device. For example, in a case where the application model supported by the third device includes model A, model B, and model C, model data of model A is stored in the third device, and model data of model B and model C is not stored in the third device, the identity information of the at least one application model supported by the third device may include only identity information of model B and model C, but not include identity information of model A.

In another possible implementation, for the identity information of the at least one application model supported by the third device, whether corresponding model data of an application model(s) is stored in the third device or not is not distinguished, as long as the third device can run and/or use the application model(s), identity information of the application model(s) can be carried. In other words, the identity information of the at least one application model supported by the third device includes identity information of at least one application model that is supported by the third device and corresponding model data of which is stored in the third device, and includes identity information of at least one application model that is supported by the third device and corresponding model data of which is not stored in the third device. For example, in a case where the application model supported by the third device includes model A, model B, and model C, and whether corresponding model data is stored in the third device or not is not distinguished, the identity information of the at least one application model supported by the third device includes identity information of model A, model B, and model C.

Information 2, identity information of at least one application model corresponding model data of which is stored in the third device.

An application model corresponding model data of which is stored in the third device means that the third device has obtained the model data of the application model, and the application model can be run and/or used by the third device at any time.

In embodiments of the disclosure, a manner for obtaining the model data of the application model by the third device is not limited, which includes, but is not limited to, at least one of: downloading from a third-party platform, downloading from a network device in a communication system, obtaining through local training of the third device, or obtaining through forwarding of other devices. The third-party platform includes, but is not limited to, at least one of: various websites, platform servers, or applications, etc. The network device in the communication system includes, but is not limited to, at least one of: an access-network device, a core-network device, an application-model management control device, or an operation administration and maintenance (OAM) device.

In an implementation, information 1 and information 2 are independently defined and separately reported, that is, information 1 or information 2 can be separately reported, and types of reported data all are the identity information of the application model. Exemplarily, in order to avoid repeated reporting of the identity information of the same application model, it may be specified that information 1 includes only the identity information of the at least one application model that is supported by the third device and corresponding model data of which is not stored in the third device, and information 2 includes only the identity information of the at least one application model that is supported by the third device and corresponding model data of which is stored in the third device. Certainly, this disclosure does not exclude another possible implementation of information 1, and for details, reference can be made to the description of information 1, which will not be repeated herein.

In another implementation, information 2 is implemented through information 1 and indication information associated with information 1. That is, identity information of each application model or identity information of each group of application models in information 1 is associated with one indication information, where the indication information indicates whether model data of one application model or one group of application models associated with the indication information has been stored in the first device.

Information 3, identity information of at least one application model corresponding model data of which is not stored in the third device.

An application model corresponding model data of which is not stored in the third device means that the third device has not obtained the model data of the application model, and the application model cannot be run and/or used by the third device.

In an implementation, information 1 and information 3 are independently defined and separately reported, that is, information 1 or information 3 can be separately reported, and types of reported data all are the identity information of the application model. Exemplarily, in order to avoid repeated reporting of the identity information of the same application model, it may be specified that information 1 includes only the identity information of the at least one application model that is supported by the third device and corresponding model data of which is stored in the third device, and information 3 includes only the identity information of the at least one application model that is supported by the third device and corresponding model data of which is not stored in the third device. Certainly, this disclosure does not exclude another possible implementation of information 1, and for details, reference can be made to the description of information 1, which will not be repeated herein.

In another implementation, information 3 is implemented through information 1 and indication information associated with information 1. That is, identity information of each application model or identity information of each group of application models in information 1 is associated with one indication information, where the indication information indicates whether model data of one application model or one group of application models associated with the indication information has been stored in the first device.

Information 4, usage specification information of the at least one application model corresponding model data of which is stored in the third device.

Usage specification information of the application model constrains use of the application model. For detailed introduction of the usage specification information, reference can be made to embodiments below.

Information 5, identity information of at least one application model that has been activated for use by the third device.

Information 6, activation indication information of the at least one application model corresponding model data of which is stored in the third device, where the activation indication information of the at least one application model indicates whether the at least one application model has been activated for use.

There are two manners for notifying to another device (for example, the second device) that the at least one application model corresponding model data of which is stored in the third device is in an active-use state (referred to as "active state" for short) or in an inactive-use state (referred to as "inactive state" for short), as follows. First, a separate parameter is used for notifying. That is, like information 5 above, the application model information includes the identity information of the at least one application model that has been activated for use by the third device. With respect to a parameter for information 2 above, although information 5 and information 2 both include the identity information of the application model, the meanings of different parameters are different. Second, an extended parameter for information 2 is used for notifying. For example, identity information of each application model in information 2 is associated with one activation indication information. That is, like information 6 herein, whether the application model corresponding to the identity information is in the active state is indicated via the activation indication information. Exemplarily, the value of the activation indication information being "1" indicates that an associated application model is in the active state, and the value of the activation indication information being "0" indicates that the associated application model is in the inactive state. In some other embodiments, the value of the activation indication information may have an opposite meaning, which is not limited in the disclosure.

In some embodiments, the application model information includes information 1, information 2, and information 6. In this case, the following manners can be used to simplify signaling overhead, and at the same time, the functions of information 1, information 2, and information 6 can be retained. That is, the identity information of each application model in information 1 is associated with one indication information (referred to as "joint indication information" herein to distinguish from the indication information appearing in other places in the disclosure), where the joint indication information indicates whether corresponding model data of an application model corresponding to the identity information is stored and whether the application model is in the active state. Exemplarily, the joint indication information occupies at least two bits, the value of which has the following meanings. For example, "11" indicates that the model data of the application model is stored in the third device and the application model has been activated for use by the third device. "10" indicates that the model data of the application model is stored in the third device and the application model is not activated for use by the third device. "01" indicates that the model data of the application model is not stored in the third device, that is, the third device only has the capability to support running and/or use of the application model but has not actually obtained the model data of the application model. Certainly, a correspondence between the value of the joint indication information and the specific meaning is not limited in the disclosure, and the above example is only one of the manners. In such a joint reporting manner for the identity information of the application model and the joint indication information, signaling overhead required by the first device for sending the application model information can be simplified.

In some embodiments, the usage specification information of the application model includes, but is not limited to, at least one of information 4-1, information 4-2, information 4-3, information 4-4, information 4-5, information 4-6, or information 4-7 below.

Information 4-1, functionality information of the application model, indicating a function associated with the application model.

Exemplarily, the function associated with the application model includes, but is not limited to, at least one of: a terminal device connected-state mobility function, a terminal device beam management function, a terminal device positioning function, or the like.

Information 4-2, scenario information of the application model, indicating a scenario associated with the application model.

Exemplarily, a scenario associated with an application model applicable to the terminal device positioning function may include at least one of: a line-of-sight scenario, a non-line-of-sight scenario, or a mixed scenario. A scenario associated with an application model applicable to the terminal device connected-state mobility function may include at least one of: frequency range 1 (FR1) scenario, FR2-1 scenario, or FR2-2 scenario. In addition, subdivided scenarios corresponding to different functions are generally different, which is not limited in the disclosure.

Information 4-3, usage-range control information of the application model, indicating a usage range of the application model.

Exemplarily, the usage range of the application model is defined by geographical area coordinates. In a case where current geographical coordinates of the terminal device fall within a defined range of geographical area coordinates associated with a corresponding application model, the application model is considered valid, and otherwise, the application model is considered invalid or cannot be activated for use.

Exemplarily, the usage range of the application model is defined by a logic identity. In a case where an area identity allocated to the network device where the terminal device is currently camped on falls within a defined range of a logic identity associated with the application model, the application model is considered valid, and otherwise, the application model is considered invalid or cannot be activated for use. A common logic identity includes, but is not limited to, a tracking area (TA) identity, a radio access network area code (RANAC), a cell identity, a PLMN identity, a frequency-point identity, a frequency-band identity, and the like, which is not limited in the disclosure.

Information 4-4, an input information set of the application model, indicating a type and/or number (quantity) of input information of the application model.

A type and/or number of input information of each application model may be the same or may be different.

Information 4-5, an output information set of the application model, indicating a type and/or number of output information of the application model.

A type and/or number of output information of each application model may be the same or may be different.

Information 4-6, input processing information of the application model, indicating a pre-processing manner for the input information of the application model.

After a user of the application model obtains the input information of the application model, the user may need to pre-process the input information before inputting the input information into the application model for inference. Herein, since different input information may have different sources and information formats of different input information may be not unified, the input information needs to be converted into a unified format before being input into the application model. In another case, a format of the obtained input information may be different from an information format defined by the application model itself, and thus the obtained input information needs to be pre-processed. For example, in a case where a 4×4 matrix is needed for the input information of the application model but collected data is arranged in a 3×3 matrix, in a pre-processing process, the 3×3 matrix may be converted into the 4×4 matrix needed for the input information of the application model.

Information 4-7, output processing information of the application model, indicating a post-processing manner for the output information of the application model.

For post-processing of the output information of the application model, format conversion of the output information is needed because a format of the output information of the application model may be different from an information format required by a user of the output information.

Optionally, the usage specification information of the application model may have a one-to-one or one-to-multiple association with application models. One-to-multiple indicates that multiple application models correspond to the same usage specification information.

In some embodiments, as illustrated in FIG. 4, before the operation at 320, the method may further include an operation at 310 below.

At 310, the second device sends a second message to the first device, where the second message is used to trigger the first device to send the first message.

Accordingly, the first device receives the second message sent by the second device.

In terms of sending, by the first device, the first message to the second device, the first device may be triggered to send the first message to the second device upon reception of the second message sent by the second device. Alternatively, the operation at 310 may be omitted, and the first device autonomously determines when to send the first message to the second device. That is, the operation at 310 is optional, which is not limited in the disclosure.

According to the technical solutions provided in this embodiment, the first device sends the first message to the second device, where the first message contains application model information related to a third device, thereby realizing interaction of the application model information between devices. For one thing, this helps synchronization of application model information between devices. For another, based on synchronized application model information, a control process associated with the application model information can be triggered. Therefore, the management and application of an application model in a communication system can be realized, and the performance of the communication system can be improved.

In some embodiments, the first device is a first terminal device, the second device is a network device or a second terminal device, and the first terminal device and the second terminal device are different terminal devices.

Exemplarily, in a case where the first device is the first terminal device and the second device is the second terminal device, the first terminal device sends a first message to the second terminal device, where the first message contains application model information related to a third device. Exemplarily, in a case where the third device is the first terminal device, the first terminal device sends a first message to the second terminal device, where the first message contains application model information related to the first terminal device. As such, the first terminal device can provide the application model information related to the first terminal device for at least one second terminal device, so that the at least one second terminal device knows the application model information related to the first terminal device. In some other embodiments, the third device may not be the first terminal device. For example, the third device may be the second terminal device or another terminal device other than the first terminal device and the second terminal device.

Exemplarily, in a case where the first device is the first terminal device and the second device is the network device, the first terminal device sends a first message to the network device, where the first message contains application model information related to a third device. Exemplarily, in a case where the third device is the first terminal device, the first terminal device sends a first message to the network device, where the first message contains application model information related to the first terminal device. Exemplarily, the network device is at least one of: an access-network device, a core-network device, an application-model management control device, or an OAM device. As such, the first terminal device can provide the application model information related to the first terminal device for at least one network device, so that the at least one network device knows the application model information related to the first terminal device. In some other embodiments, the third device may not be the first terminal device. For example, the third device may be another terminal device other than the first terminal device.

In some embodiments, the first device is a first network device, the second device is a second network device or a terminal device, and the first network device and the second network device are different network devices.

Exemplarily, in a case where the first device is the first network device and the second device is the second network device, the first network device sends a first message to the second network device, where the first message contains application model information related to a third device. Exemplarily, in a case where the third device is a first terminal device, the first network device sends a first message to the second network device, where the first message contains application model information related to the first terminal device. As such, application model information related to the terminal device can be interacted between different network devices.

Exemplarily, in a case where the first device is the first network device and the second device is the terminal device, the first network device sends a first message to the terminal device, where the first message contains application model information related to a third device. Exemplarily, in a case where the third device is the first terminal device, the second device is the second terminal device, and the first terminal device and the second terminal device are different terminal devices, the first network device sends a first message to the second terminal device, where the first message contains application model information related to the first terminal device. As such, the first network device can provide the application model information related to the first terminal device for at least one another terminal device other than the first terminal device. In some other embodiments, both the second device and the third device may be the first terminal device. For example, the first network device can send the application model information related to the first terminal device to the first terminal device via the first message.

Exemplarily, the first network device is at least one of: an access-network device, a core-network device, an application-model management control device, or an OAM device. The second network device is at least one of: an access-network device, a core-network device, an application-model management control device, or an OAM device. The first network device and the second network device may be the same type of network devices, for example, both are access-network devices, core-network devices, application-model management control devices, or OAM devices. Alternatively, the first network device and the second network device may be different types of network devices. For example, the first network device is an access-network device and the second network device is a core-network device, or the first network device is a core-network device and the second network device is an access-network device, etc. which will not be exhaustively exemplified in the disclosure.

In addition, there are two possible manners for interaction of a message (for example, the first message and/or the second message described above) between the first device and the second device, as follows. First, direct message-interaction is performed between the first device and the second device, i.e., without a need for message forwarding through other devices. Exemplarily, a typical scenario of the direct message-interaction includes direct communication between the access-network device and the terminal device or direct communication between the first terminal device and the second terminal device. Second, indirect message-interaction is performed between the first device and the second device, i.e., with a need for message forwarding through other devices. Exemplarily, a typical scenario of the indirect message-interaction includes indirect communication between the core-network device (or the application-model management control device or the OAM device) and the terminal device through the access-network device, or indirect communication between the first terminal device and the second terminal device through at least one third terminal device (communication through one third terminal device represents single-hop indirect communication, and communication through two or more third terminal devices represents multi-hop indirect communication). A manner for message interaction between the first device and the second device is not limited in the disclosure.

The technical solutions provided in this embodiment provide schemes for interaction of application model information related to a certain device (for example, a certain terminal device) in different scenarios. For example, by means of interaction of application model information related to the terminal device between devices (for example, between the terminal device and the terminal device, between the terminal device and the network device, or between the network device and the network device), another device (for example, another terminal device or network device) can know at any time the following situations of the terminal device: which application models can be supported but corresponding model data of which is not obtained, corresponding model data of which application models has been obtained, corresponding model data of which application models has been obtained and the application models have been activated for use, and the like. With the above information, another terminal device or network device will not transfer repeated model data to the terminal device. In addition, another terminal device or network device may activate or deactivate model data stored in the terminal device on demand, and may further adjust its configuration or resources upon activation or deactivation of the application model, thereby improving the operating efficiency of the communication system.

Exemplarily, the technical solutions provided in this embodiment can solve the following problems. First, after the terminal device moves across a cell or an area, the same application model will not be obtained repeatedly, because another terminal device or network device has obtained the application model information related to the terminal device, and the application model information explicitly indicates that model data of which application models is stored in the terminal device. Second, it is ensured that the terminal device and the network device or another terminal device have a consistent understanding of an activation state of a specific application model. For one thing, a misunderstanding caused by the use of a certain application model at a side and not use of the application model at another side will not occur (for example, in a channel state information (CSI) compression feedback scenario, the use of an AI/ML model only at a single side may lead to poor performance and even an error in reception of a peer side). For another, a case where a certain application model is used at a side and corresponding resources are not cooperatively configured by another side will not occur (for example, during beam management, the AI/ML model is deployed and activated at the terminal device side, and a specific beam pattern may need to be sent at the network device side, so that the AI/ML model activated by the terminal device can achieve an optimal use effect).

Exemplarily, the first device is a first network device, the second device is a second network device, and the third device is a first terminal device, based on which several typical scenarios where application model information related to a terminal device is transferred between network devices will be described in detail below.

Scenario 1, a core-network device sends application model information related to the first terminal device to an access-network device. That is, in a case where the first network device is the core-network device and the second network device is the access-network device, the core-network device sends a first message to the access-network device, where the first message contains the application model information related to the first terminal device.

Exemplarily, the access-network device does not always maintain context information of the terminal device (for example, the first terminal device) (the context information of the terminal device includes much information, such as configuration information, capability information, other assistance information for assisting the network device in management of the terminal device, etc., and the application model information may be considered as a type of assistance information for assisting the network device in management of the terminal device). For example, after the terminal device returns to an idle state, the access-network device often deletes access-network context information of the terminal device. In order that the access-network device can manage the terminal device according to the application model information related to the terminal device when the terminal device returns to a connected state, the core-network device can provide the application model information related to the terminal device for the access-network device. Certainly, a process in which the core-network device transfers the application model information related to the terminal device to the access-network device may be triggered by the core-network device, or may be triggered upon transmission of a request of the access-network device to the core-network device. In addition, another manner is that the access-network device directly obtains the application model information from the terminal device via the above first message, which is not limited in the disclosure.

Scenario 2, a source core-network device sends the application model information related to the first terminal device to a target core-network device. That is, in a case where the first network device is the source core-network device and the second network device is the target core-network device, the source core-network device sends a first message to the target core-network device, where the first message contains the application model information related to the first terminal device.

Exemplarily, as the terminal device (for example, the first terminal device) moves, the access-network device and/or the core-network device that serve the terminal device may change. A serving network of the terminal device can often be changed through re-registration or cell handover. In order that the target core-network device can also manage the terminal device according to the application model information related to the terminal device, the source core-network device can provide the application model information related to the terminal device for the target core-network device. A transfer process may be triggered by the source core-network device, or may be triggered upon transmission of a request of the target core-network device to the source core-network device.

Scenario 3, the access-network device sends the application model information related to the first terminal device to the core-network device. That is, in a case where the first network device is the access-network device and the second network device is the core-network device, the access-network device sends a first message to the core-network device, where the first message contains the application model information related to the first terminal device.

Exemplarily, after the terminal device (for example, the first terminal device) returns to the idle state, the access-network device often deletes context information of the terminal device stored at a corresponding access-network side. In order to store the application model information related to the terminal device, prior to release of access-network context information of a corresponding terminal device, the access-network device can provide the application model information related to the terminal device for the core-network device. In this way, even though the terminal device returns to the idle state, the context information of the terminal device at the core-network device is still normally stored and maintained by the core-network device. Upon reception of the application model information related to the terminal device sent by the access-network device, the core-network device can store the application model information as a part of core-network context information of the terminal device. When the access-network device is ready to re-establish the access-network context information for the corresponding terminal device (for example, when the terminal device returns to the connected state), the core-network device can further transfer the application model information back to the access-network device, so that the access-network device can continue to manage the corresponding terminal device according to the application model information. Certainly, the core-network device itself may also use the received application model information related to the terminal device sent by the access-network device. A process in which the access-network device transfers the application model information related to the terminal device to the core-network device may be triggered by the access-network device, or may be triggered upon transmission of a request of the core-network device to the access-network device.

Scenario 4, a source access-network device sends the application model information related to the first terminal device to a target access-network device. That is, in a case where the first network device is the source access-network device and the second network device is the target access-network device, the source access-network device sends a first message to the target access-network device, where the first message contains the application model information related to the first terminal device.

Exemplarily, as the terminal device (for example, the first terminal device) moves, the access-network device serving the terminal device may change. A serving access network of the terminal device can often be changed through cell handover. During handover, the source access-network device can provide the application model information related to the terminal device for the target access-network device, so that the target access-network device can manage a corresponding terminal device according to the application model information after handover. An information transfer process may be triggered by the source access-network device, or may be triggered upon transmission of a request of the target access-network device to the source access-network device.

The above exemplarily introduces scenarios 1 to 4 where the application model information related to the terminal device is transferred between the network devices, but these are merely exemplary and explanatory. This disclosure is not limited thereto and may further include other scenarios, for example, a scenario where the application model information related to the terminal device is transferred between the access-network device and the application-model management control device, between the access-network device and the OAM device, between the core-network device and the application-model management control device, between the core-network device and the OAM device, between the application-model management control device and the OAM device, between the application-model management control device and the application-model management control device, between the OAM device and the OAM device, or the like.

Activation and deactivation of the application model will be described below.

In some embodiments, the first device activates and/or deactivates, based on a first preset condition, an application model corresponding model data of which is stored.

The activation or deactivation operation for the model may occur between a network device and a network device, that is, one network device activates an application model deployed by another network device. Alternatively, the activation or deactivation operation for the model may occur between a network device and a terminal device, that is, the network device activates an application model deployed by the terminal device. Alternatively, the activation or deactivation operation for the model may occur between a terminal device and a terminal device, that is, one terminal device activates an application model deployed by another terminal device. Regardless of the above cases, the application model can be activated and/or deactivated based on the first preset condition below.

In some embodiments, the first preset condition includes, but is not limited to, at least one of condition 1, condition 2, condition 3, condition 4, or condition 5 below.

Condition 1, in a case where a source device of the application model provides the model data of the application model for the first device, the source device indicates to the first device whether the application model is to be activated.

In a case where the source device provides the application model for the first device, the source device indicates whether the application model needs to be activated. The source device of the application model refers to a provider of the application model. Exemplarily, the source device of the application model is a network device or a terminal device. For example, for the case where the application model is provided for the first device, the source device of the application model may be another device other than the first device, and the another device may be a network device or a terminal device.

Optionally, a non-first device may subsequently manage, via an activation or deactivation instruction of the application model, an application model stored in the first device. The non-first device is the source device of the application model, or the non-first device is another device other than the source device of the application model and the first device. Exemplarily, the non-first device is a network device or a terminal device.

Condition 2, in a case where the source device of the application model provides the model data of the application model for the first device, the application model is in an inactive state by default or the application model is in an active state by default.

In a case where the source device provides the application model for the first device, the application model is in the inactive state by default or the application model is in the active state by default. Regarding illustration of the source device, reference can be made to the above, which will not be repeated herein and below.

Optionally, the non-first device may subsequently manage, via the activation or deactivation instruction of the application model, the application model stored in the first device. Regarding illustration of the non-first device, reference can be made to the above, which will not be repeated herein and below.

Condition 3, in a case where the source device of the application model provides the model data of the application model for the first device, the source device provides an activation condition and/or a deactivation condition associated with the application model for the first device; and in a case where the activation condition is satisfied or the deactivation condition is not satisfied, the first device activates the application model or keeps the application model in the active state, and/or in a case where the deactivation condition is satisfied or the activation condition is not satisfied, the first device deactivates the application model or keeps the application model in the inactive state.

In a case where the source device provides the application model for the first device, the source device further provides the activation condition and/or the deactivation condition associated with the application model for the first device. When the application model satisfies the activation condition, the first device activates the corresponding application model or keeps the application model in the active state. Otherwise, when the application model does not satisfy the activation condition, the first device deactivates the corresponding application model or keeps the application model in the inactive state.

Optionally, in a case where the application model satisfies the activation condition or does not satisfy the deactivation condition, the first device may also activate the application model, and notify another network device or another terminal device that the application model has been activated; and/or in a case where the application model does not satisfy the activation condition or satisfies the deactivation condition, the first device may also deactivate the application model, and notify another network device or another terminal device that the application model has been deactivated.

In some embodiments, for example, the source device is the second device. The second device sends configuration information of an activation condition and/or a deactivation condition to the first device, where the activation condition and/or the deactivation condition are used to activate or deactivate the application model stored in the first device. Accordingly, the first device receives the configuration information of the activation condition and/or the deactivation condition sent by the second device, determines the activation condition and/or the deactivation condition associated with the application model according to the configuration information, and subsequently activates and/or deactivates the application model according to the activation condition and/or the deactivation condition.

Condition 4, the first device storing the model data of the application model autonomously determines to activate or deactivate the application model.

That is, the activation or deactivation operation for the application model stored in the first device does not depend on an activation command or a deactivation command sent by another network device or another terminal device, or the configured activation/deactivation condition.

Optionally, when the first device activates an application model, the first device may further notify another network device or another terminal device that the application model has been activated; and/or when the first device deactivates an application model, the first device may further notify another network device or another terminal device that the application model has been deactivated.

Condition 5, the first device receives an activation or deactivation instruction sent by a non-first device to activate or deactivate the application model.

The activation instruction is used to activate the application model, and the deactivation instruction is used to deactivate the application model.

In some embodiments, for example, the non-first device is the second device. The second device sends an activation or deactivation instruction to the first device, where the activation or deactivation instruction is used to activate or deactivate an application model stored in the first device. Accordingly, the first device receives the activation or deactivation instruction sent by the second device, so as to activate or deactivate the application model stored in the first device according to the activation or deactivation instruction.

In some embodiments, the first device may also send the activation or deactivation instruction to the second device, where the activation or deactivation instruction is used to activate or deactivate an application model stored in the second device. Accordingly, the second device receives the activation or deactivation instruction sent by the first device, so as to activate or deactivate the application model stored in the second device according to the activation or deactivation instruction.

In some embodiments, after the first device activates and/or deactivates, based on the first preset condition, the application model corresponding model data of which is stored, the first device may further send updated application model information related to the first device to the non-first device.

In addition, the network device mentioned in this embodiment may be an access-network device, a core-network device, an application-model management control device, or an OAM device, which is not limited in the disclosure.

The technical solutions provided in this embodiment specify a rule for activating and/or deactivating the application model by the terminal device or the network device, so that performance degradation and even misunderstanding will not be caused by an inconsistent understanding of an activation or deactivation state of a specific model between devices.

The storage and deletion operations for the model data of the application model will be described below.

In some embodiments, the first device deletes, based on a second preset condition, stored model data of an application model.

The model data of the application model involves the storage and deletion operations. That is, the first device can continue to store the model data of the application model under a certain condition, and can delete the model data of the application model under a certain condition.

In some embodiments, the second preset condition includes, but is not limited to, at least one of condition 1, condition 2, or condition 3 below.

Condition 1, in a case where the first device storing model data of the application model receives a deletion instruction sent by a non-first device, the first device deletes the model data of the application model.

Optionally, a single deletion instruction may be used to delete stored model data of one application model, and may also be used to delete stored model data of multiple, a group, or all of application models.

Exemplarily, in a case where the non-first device is the second device, the second device sends the deletion instruction to the first device, where the deletion instruction is used to delete model data of an application model stored in the first device. Accordingly, the first device receives the deletion instruction sent by the second device, and the first device deletes the model data of the application model stored in the first device according to the deletion instruction.

Exemplarily, the first device may also send the deletion instruction to the second device, where the deletion instruction is used to delete model data of an application model stored in the second device. Accordingly, the second device receives the deletion instruction sent by the first device, and the second device deletes the model data of the application model stored in the second device according to the deletion instruction.

Condition 2, in a case where a deletion condition associated with the application model is satisfied, the first device deletes the model data of the application model, where the deletion condition is configured by the non-first device.

Optionally, each application model has an associated deletion condition. One deletion condition may be associated with only one application model, or may be associated with multiple, a group, or all of application models.

Exemplarily, in a case where the non-first device is the second device, the second device sends configuration information of a deletion condition to the first device, where the deletion condition is used to delete the model data of the application model stored in the first device. Accordingly, the first device receives the configuration information of the deletion condition sent by the second device, and determines the deletion condition associated with the application model stored in the first device according to the configuration information.

Condition 3, the first device storing the model data of the application model autonomously determines to delete the model data of the application model.

The deletion operation for the application model stored in the first device does not depend on the deletion instruction sent by another device or the configured deletion condition associated with the application model. Whether and when to perform deletion is autonomously determined by the first device.

In some embodiments, in terms of deleting, by the first device based on the second preset condition, the stored model data of the application model, the first device may notify the non-first device that the corresponding application model has been deleted, and/or the first device may send updated application model information related to the first device to the non-first device.

The non-first device mentioned in this embodiment may be any device different from the first device. Exemplarily, the non-first device is the source device of the application model, or the non-first device is another device other than the source device of the application model and the first device. Regarding illustration of the non-first device and the source device, reference can be made to the above, which will not be repeated herein.

The technical solutions provided in this embodiment specify a rule for storing and deleting the model data by the terminal device or the network device, thereby maintaining the consistency of understanding between devices, and avoiding the problem of inefficient memory usage caused by continuous storage of the model data.

The interaction of assistance information between the first device and the non-first device will be described below.

In some embodiments, the first device sends assistance information to the non-first device, and accordingly, the non-first device receives the assistance information sent by the first device. The assistance information includes, but is not limited to at least one of: identity information of at least one application model expected by the first device to be activated, identity information of at least one application model expected by the first device to be deactivated, or identity information of at least one application model expected by the first device to be deleted.

The non-first device may be any device different from the first device. Exemplarily, the non-first device is the source device of the application model, or the non-first device is another device other than the source device of the application model and the first device. Exemplarily, the non-first device is the second device. For example, the first device sends the assistance information to the second device, and accordingly, the second device receives the assistance information sent by the first device.

According to the technical solutions provided in this embodiment, by means of interaction of the above assistance information between devices, in terms of performing, by the non-first device, operations such as activation, deactivation, or deletion for the application model stored in the first device, the non-first device can perform the above operations based on the above assistance information, thereby helping enhance the consistency of understanding between devices.

Behaviors of processing an application model after a device is shut down or deregistered or deactivated or dormant will be described below.

In this embodiment, taking a first device as an example, the first device may be any device in which the application model is stored. The first device may be a terminal device or a network device. Exemplarily, in a case where the first device is the terminal device, after the terminal device is shut down or deregistered, the terminal device may perform any one of behavior 1, behavior 2, behavior 3, behavior 4, behavior 5, or behavior 6 below. Exemplarily, in a case where the first device is the network device, after the network device is deactivated or dormant, the network device may perform any one of behavior 1, behavior 2, behavior 3, behavior 4, behavior 5, or behavior 6 below.

In some embodiments, after the first device is shut down or deregistered or deactivated or dormant, the first device may perform any one of behavior 1, behavior 2, behavior 3, behavior 4, behavior 5, or behavior 6 below.

Behavior 1, stored model data of an application model is not deleted.

After the first device is shut down or deregistered or deactivated or dormant, for the stored model data of the application model, the first device continues to store the stored model data and does not delete the stored model data.

Optionally, after the first device is shut down or deregistered or deactivated or dormant, the first device does not delete stored model data of all of application models.

Behavior 2, a stored application model is deactivated but the stored model data of the application model is not deleted.

After the first device is shut down or deregistered or deactivated or dormant, for the stored application model, the first device deactivates the stored application model but does not delete the stored model data of the application model.

Optionally, after the first device is shut down or deregistered or deactivated or dormant, the first device deactivates all of stored application models but does not delete the stored model data of all of the application models.

Behavior 3, the stored model data of the application model is deleted.

After the first device is shut down or deregistered or deactivated or dormant, for the stored model data of the application model, the first device deletes the stored model data.

Optionally, after the first device is shut down or deregistered or deactivated or dormant, the first device deletes the stored model data for all of the application models.

Behavior 4, model data of an application model that satisfies a storage condition is not deleted, and model data of an application model that does not satisfy the storage condition is deleted.

After the first device is shut down or deregistered or deactivated or dormant, the first device does not delete the model data of the application model that satisfies the storage condition, and deletes the model data of the application model that does not satisfy the storage condition. Alternatively, after the first device is shut down or deregistered or deactivated or dormant, the first device deletes model data of an application model that satisfies a deletion condition, and does not delete model data of an application model that does not satisfy the deletion condition.

Exemplarily, after the first device is shut down or deregistered or deactivated or dormant, the first device retains all of model data of an application model(s) obtained through a non-3rd generation partnership project (3GPP) system, but deletes all of model data of an application model(s) obtained through a 3GPP system.

Behavior 5, whether to delete model data of the application model or not is determined according to indication information associated with the stored application model.

Exemplarily, indication information associated with the application model can be represented by 1 bit. For example, the value being "1" indicates that the model data of the application model is to be deleted, and the value being "0" indicates that the model data of the application model is not to be deleted. Alternatively, the value being "1" indicates that delete the model data of the application model is not to be deleted, and the value being "0" indicates that the model data of the application model is to be deleted.

Behavior 6, an application model to be deleted and/or an application model to be stored are determined according to a default rule.

Exemplarily, the default rule may be specified in a protocol. For example, the protocol specifies, according to the default rule, a type and/or identity information of the application model to be deleted, and/or, a type and/or identity information of the application model to be stored. After the first device is shut down or deregistered or deactivated or dormant, the first device determines, according to above the default rule, the application model to be deleted and/or the application model to be stored.

The technical solutions provided in this embodiment specify the behaviors of processing the application model after the device is shut down or deregistered or deactivated or dormant. In this way, it can be ensured that the device can store application model data that needs to be stored and delete application model data that does not need to be stored, and thus the memory space of the device can be released.

The interaction of enabling information and capability information between devices will be described below.

In some embodiments, the second device sends first indication information to the first device, and accordingly, the first device receives the first indication information sent by the second device. The first indication information indicates at least one of the following meanings.
1. Whether the first device is allowed to send to the second device the application model information related to the third device.
2. Whether the first device is allowed to autonomously determine to activate and/or deactivate an application model.
3. Whether the first device is allowed to autonomously determine to delete model data of the application model.
4. Whether the first device is allowed to send assistance information to the second device.

In some embodiments, the first device sends second indication information to the second device, and accordingly, the second device receives the second indication information sent by the first device. The second indication information indicates at least one of the following meanings.
1. Whether the first device has a willingness or capability to provide the application model information related to the third device for the second device.
2. Whether the first device has a capability to autonomously determine to activate and/or deactivate an application model.
3. Whether the first device has a capability to autonomously determine to delete model data of the application model.
4. Whether the first device has a willingness or capability to provide assistance information for the second device.

According to the technical solutions provided in this embodiment, by means of interaction of the enabling information and the capability information between the devices, the devices can be kept synchronized in terms of capabilities and requirements, thereby facilitating better management and control of the application model.

The transfer operation for the model data of the application model will be described below.

In some embodiments, model data of an application model is transferred between the first device and a source device of the application model, in a case where at least one of case 1, case 2, case 3, case 4, or case 5 below is satisfied.

Case 1, the source device of the application model deploys the application model to the first device.

Case 2, the source device of the application model actively updates or modifies model data of the application model stored in the first device.

Case 3, the first device requests the source device of the application model to update or modify the model data of the application model stored in the first device.

Case 4, the first device requests the source device of the application model to download the model data of the application model.

Case 5, the first device requests the source device of the application model to upload the model data of the application model.

For cases 1 to 4 above, the source device of the application model sends the model data of the application model to the first device. For case 5 above, the first device sends the model data of the application model to the source device of the application model.

The model data of the application model transferred between devices may be the whole model data of the application model, or part of the model data of the application model, or part of the whole model data (i.e., transmission of part of the model data of the application model is allowed). The behaviors of transferring the model data between the devices may be triggered by the source device (an application model data sender), or may be triggered upon transmission of a request of a target device (an application model data receiver, such as the first device) to the source device. Reasons for triggering the transfer of the model data between the devices may include at least one of case 1, case 2, case 3, case 4, or case 5 above.

In addition, for the first device, the source device of the application model may be any other device different from the first device, such as a network device or a terminal device, which is not limited in the disclosure.

Several scenarios where the model data of the application model is transferred will be exemplarily described below.

Scenario 1, the first device and the source device of the application model are two different network devices, that is, the model data of the application model is transferred between two different network devices. The network device may be an access-network device, a core-network device, an application-model management control device, or an OAM device.

Exemplarily, a typical scenario is that the application-model management control device transfers model data of trained application models to the access-network device or the core-network device or the OAM device, and a receiver device uses these application models for inference at appropriate time.

Scenario 2, the first device is a terminal device and the source device of the application model is a network device, that is, the network device transfers the model data of the application model to the terminal device, or the terminal device transfers the model data of the application model to the network device. The network device may be an access-network device, a core-network device, an application-model management control device, or an OAM device.

Exemplarily, a typical scenario is that the application-model management control device transfers model data of trained application models to the terminal device, and the terminal device uses these application models for inference at appropriate time. Another typical scenario is that the terminal device uploads model data of its own application models to the application-model management control device, so that another terminal device can also obtain the model data of the application models from the application-model management control device.

Scenario 3, the first device and the source device of the application model are two different terminal devices, that is, the model data of the application model is transferred between two different terminal devices.

In this scenario, the terminal devices can directly share the model data of the application model, which is more flexible than obtaining the model data from the network device.

The technical solutions provided in this embodiment provide conditions and manners for transferring the model data of the application model, and describe a transmission process in the several typical scenarios, thereby implementing transfer of the model data between devices.

It may be noted that, the foregoing operations performed by the first device may be separately implemented as a communication method at a first device side, and the foregoing operations performed by the second device may be separately implemented as a communication method at a second device side.

The following will describe apparatus embodiments of the disclosure, which may be used for implementing the method embodiments of the disclosure. For details not disclosed in the apparatus embodiments of the disclosure, reference can be made to the method embodiments of the disclosure.

Reference is made to FIG. 5 which is a block diagram of a communication apparatus provided in an embodiment of the disclosure. The apparatus has a function of implementing method examples at the first device side described above. The function may be implemented by hardware, or may be implemented by hardware executing corresponding software. The apparatus may be a first device, or may be disposed in the first device. As illustrated in FIG. 5, the apparatus 500 may include a sending module 510. The sending module 510 is configured to send a first message to a second device, where the first message contains application model information related to a third device.

In some embodiments, the application model information includes at least one of: identity information of at least one application model supported by the third device, identity information of at least one application model corresponding model data of which is stored in the third device, identity information of at least one application model corresponding model data of which is not stored in the third device, usage specification information of the at least one application model corresponding model data of which is stored in the third device, identity information of at least one application model that has been activated for use by the third device, or activation indication information of the at least one application model corresponding model data of which is stored in the third device. The activation indication information of the at least one application model indicates whether the at least one application model has been activated for use.

In some embodiments, the usage specification information of the at least one application model includes at least one of: functionality information of the at least one application model, scenario information of the at least one application model, usage-range control information of the at least one application model, an input information set of the at least one application model, an output information set of the at least one application model, input processing information of the at least one application model, or output processing information of the at least one application model. The functionality information indicates a function associated with the at least one application model. The scenario information indicates a scenario associated with the at least one application model. The usage-range control information indicates a usage range of the at least one application model. The input information set indicates a type and/or number of input information of the at least one application model. The output information set indicates a type and/or number of output information of the at least one application model. The input processing information indicates a pre-processing manner for the input information of the at least one application model. The output processing information indicates a post-processing manner for the output information of the at least one application model.

In some embodiments, as illustrated in FIG. 5, the apparatus 500 further includes a receiving module 520. The receiving module 520 is configured to receive a second message sent by the second device, where the second message is used to trigger the first device to send the first message.

In some embodiments, as illustrated in FIG. 5, the apparatus 500 further includes an activating module 530. The activating module 530 is configured to activate and/or deactivate, based on a first preset condition, an application model corresponding model data of which is stored.

In some embodiments, the first preset condition includes at least one of the following. In a case where a source device of the application model provides the model data of the application model for the first device, the source device indicates to the first device whether the application model is to be activated. In a case where the source device of the application model provides the model data of the application model for the first device, the application model is in an inactive state by default or the application model is in an active state by default. In a case where the source device of the application model provides the model data of the application model for the first device, the source device provides an activation condition and/or a deactivation condition associated with the application model for the first device; and in a case where the activation condition is satisfied or the deactivation condition is not satisfied, the first device activates the application model or keeps the application model in the active state, and/or in a case where the deactivation condition is satisfied or the activation condition is not satisfied, the first device deactivates the application model or keeps the application model in the inactive state. The first device storing the model data of the application model autonomously determines to activate or deactivate the application model. The first device receives an activation or deactivation instruction sent by a non-first device to activate or deactivate the application model. The non-first device is the source device of the application model, or the non-first device is another device other than the source device of the application model and the first device.

In some embodiments, the sending module 510 is further configured to send an activation or deactivation instruction to the second device, where the activation or deactivation instruction is used to activate or deactivate an application model stored in the second device.

In some embodiments, as illustrated in FIG. 5, the apparatus 500 further includes a deleting module 540. The deleting module 540 is configured to delete, based on a second preset condition, stored model data of an application model.

In some embodiments, the second preset condition includes at least one of the following. In a case where the first device storing model data of the application model receives a deletion instruction sent by a non-first device, the first device deletes the model data of the application model. In a case where a deletion condition associated with the application model is satisfied, the first device deletes the model data of the application model, where the deletion condition is configured by the non-first device. The first device storing the model data of the application model autonomously determines to delete the model data of the application model. The non-first device is a source device of the application model, or the non-first device is another device other than the source device of the application model and the first device.

In some embodiments, the sending module 510 is further configured to send a deletion instruction to the second device, where the deletion instruction is used to delete model data of an application model stored in the second device.

In some embodiments, the sending module 510 is further configured to send assistance information to the second device. The assistance information includes at least one of: identity information of at least one application model expected by the first device to be activated, identity information of at least one application model expected by the first device to be deactivated, or identity information of at least one application model expected by the first device to be deleted.

In some embodiments, after the first device is shut down or deregistered or deactivated or dormant, the first device performs any one of the following behaviors. Stored model data of an application model is not deleted. A stored application model is deactivated, but the stored model data of the application model is not deleted. The stored model data of the application model is deleted. Model data of an application model that satisfies a storage condition is not deleted, and model data of an application model that does not satisfy the storage condition is deleted. Whether to delete model data of the application model or not is determined according to indication information associated with the stored application model. An application model to be deleted and/or an application model to be stored are determined according to a default rule.

In some embodiments, the apparatus 500 further includes a receiving module 520. The receiving module 520 is configured to receive first indication information sent by the second device. The first indication information indicates at least one of the following meanings: whether the first device is allowed to send to the second device the application model information related to the third device; whether the first device is allowed to autonomously determine to activate and/or deactivate an application model; whether the first device is allowed to autonomously determine to delete model data of the application model; or whether the first device is allowed to send assistance information to the second device.

In some embodiments, the sending module 510 is further configured to send second indication information to the second device. The second indication information indicates at least one of the following meanings: whether the first device has a willingness or capability to provide the application model information related to the third device for the second device; whether the first device has a capability to autonomously determine to activate and/or deactivate an application model; whether the first device has a capability to autonomously determine to delete model data of the application model; or whether the first device has a willingness or capability to provide assistance information for the second device.

In some embodiments, model data of an application model is transferred between the first device and a source device of the application model, in a case where at least one of the following cases is satisfied: the source device of the application model deploys the application model to the first device; the source device of the application model actively updates or modifies model data of the application model stored in the first device; the first device requests the source device of the application model to update or modify the model data of the application model stored in the first device; the first device requests the source device of the application model to download the model data of the application model; or the first device requests the source device of the application model to upload the model data of the application model.

In some embodiments, the first device is a first terminal device, the second device is a network device or a second terminal device, and the first terminal device and the second terminal device are different terminal devices.

In some embodiments, the first device is a first network device, the second device is a second network device or a terminal device, and the first network device and the second network device are different network devices.

In some embodiments, the network device is at least one of: an access-network device, a core-network device, an application-model management control device, or an OAM device.

In some embodiments, the third device is a first terminal device.

In some embodiments, an application model includes at least one of: an AI model, an ML model, a supercomputing model, a neuron-like model, an authentication model, an encryption and decryption model, or a self-optimization model.

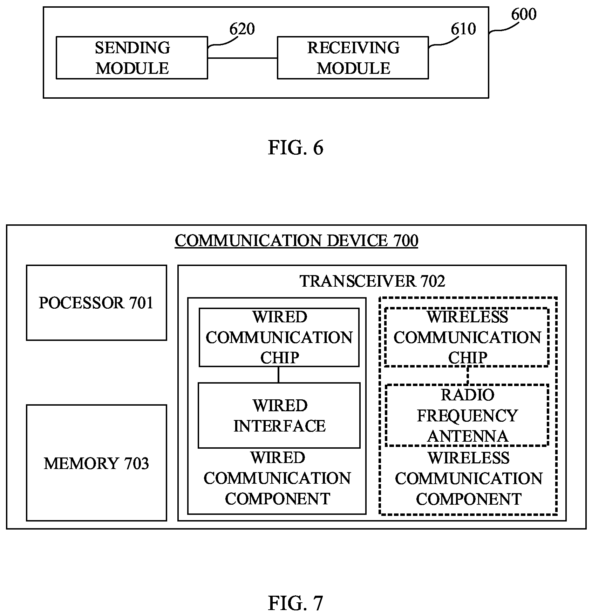

Reference is made to FIG. 6 which is a block diagram of a communication apparatus provided in another embodiment of the disclosure. The apparatus has a function of implementing method examples at the second device side described above. The function may be implemented by hardware, or may be implemented by hardware executing corresponding software. The apparatus may be a second device, or may be disposed in the second device. As illustrated in FIG. 6, the apparatus 600 may include a receiving module 610. The receiving module 610 is configured to receive a first message sent by a first device, where the first message contains application model information related to a third device.

In some embodiments, the application model information includes at least one of: identity information of at least one application model supported by the third device, identity information of at least one application model corresponding model data of which is stored in the third device, identity information of at least one application model corresponding model data of which is not stored in the third device, usage specification information of the at least one application model corresponding model data of which is stored in the third device, identity information of at least one application model that has been activated for use by the third device, or activation indication information of the at least one application model corresponding model data of which is stored in the third device. The activation indication information of the at least one application model indicates whether the at least one application model has been activated for use.

In some embodiments, the usage specification information of the at least one application model includes at least one of: functionality information of the at least one application model, scenario information of the at least one application model, usage-range control information of the at least one application model, an input information set of the at least one application model, an output information set of the at least one application model, input processing information of the at least one application model, or output processing information of the at least one application model. The functionality information indicates a function associated with the at least one application model. The scenario information indicates a scenario associated with the at least one application model. The usage-range control information indicates a usage range of the at least one application model. The input information set indicates a type and/or number of input information of the at least one application model. The output information set indicates a type and/or number of output information of the at least one application model. The input processing information indicates a pre-processing manner for the input information of the at least one application model. The output processing information indicates a post-processing manner for the output information of the at least one application model.

In some embodiments, as illustrated in FIG. 6, the apparatus 600 further includes a sending module 620. The sending module 620 is configured to send a second message to the first device, where the second message is used to trigger the first device to send the first message.

In some embodiments, as illustrated in FIG. 6, the apparatus 600 further includes a sending module 620. The sending module 620 is configured to send an activation or deactivation instruction to the first device, where the activation or deactivation instruction is used to activate or deactivate an application model stored in the first device; and/or send configuration information of an activation condition and/or a deactivation condition to the first device, where the activation condition and/or the deactivation condition are used to activate or deactivate the application model stored in the first device.

In some embodiments, the receiving module 610 is further configured to receive an activation or deactivation instruction sent by the first device, where the activation or deactivation instruction is used to activate or deactivate an application model stored in the second device.

In some embodiments, as illustrated in FIG. 6, the apparatus 600 further includes a sending module 620. The sending module 620 is configured to send a deletion instruction to the first device, where the deletion instruction is used to delete model data of an application model stored in the first device; and/or send configuration information of a deletion condition to the first device, where the deletion condition is used to delete the model data of the application model stored in the first device.

In some embodiments, the receiving module 610 is further configured to receive a deletion instruction sent by the first device, where the deletion instruction is used to delete model data of an application model stored in the second device.

In some embodiments, the receiving module 610 is further configured to receive assistance information sent by the first device. The assistance information includes at least one of: identity information of at least one application model expected by the first device to be activated, identity information of at least one application model expected by the first device to be deactivated, or identity information of at least one application model expected by the first device to be deleted.

In some embodiments, as illustrated in FIG. 6, the apparatus 600 further includes a sending module 620. The sending module 620 is configured to send first indication information to the first device. The first indication information indicates at least one of the following meanings: whether the first device is allowed to send to the second device the application model information related to the third device; whether the first device is allowed to autonomously determine to activate and/or deactivate an application model; whether the first device is allowed to autonomously determine to delete model data of the application model; or whether the first device is allowed to send assistance information to the second device.

In some embodiments, the receiving module 610 is further configured to receive second indication information sent by the first device. The second indication information indicates at least one of the following meanings: whether the first device has a willingness or capability to provide the application model information related to the third device for the second device; whether the first device has a capability to autonomously determine to activate and/or deactivate an application model; whether the first device has a capability to autonomously determine to delete model data of the application model; or whether the first device has a willingness or capability to provide assistance information for the second device.

In some embodiments, the first device is a first terminal device, the second device is a network device or a second terminal device, and the first terminal device and the second terminal device are different terminal devices.

In some embodiments, the first device is a first network device, the second device is a second network device or a terminal device, and the first network device and the second network device are different network devices.

In some embodiments, the network device is at least one of: an access-network device, a core-network device, an application-model management control device, or an OAM device.

In some embodiments, the third device is a first terminal device.

In some embodiments, an application model includes at least one of: an AI model, an ML model, a supercomputing model, a neuron-like model, an authentication model, an encryption and decryption model, or a self-optimization model.

It may be noted that, when the apparatus provided in the foregoing embodiments implements functions of the apparatus, the division of various functional modules described above is taken as an example for illustration. In practice, the foregoing functions may be allocated to different functional modules for implementation according to actual requirements, that is, the structure of the device is divided into different functional modules to implement all or some of the foregoing functions.

With respect to the apparatus in the foregoing embodiments, the manner in which the modules perform the operations has been described in detail in the embodiments related to the method, and will not be described in detail herein.

Reference is made to FIG. 7 which is a schematic structural diagram of a communication device 700 provided in an embodiment of the disclosure. The communication device 700 may be any device described above, for example, the first device or the second device, etc. The communication device 700 may be configured to perform the foregoing communication method at a first device side, or the foregoing communication method at a second device side. The communication device 700 may include a processor 701, a transceiver 702, and a memory 703.

The processor 701 includes one or more processing cores. The processor 701 is configured to execute various function applications and perform information processing by running software programs and modules. The processor 701 is configured to perform operations other than the receiving and sending operations in the foregoing method embodiments.

The transceiver 702 may include a receiver and a transmitter. For example, the transceiver 702 may include a wired communication component which may include a wired communication chip and a wired interface (for example, an optical fiber interface). Optionally, the transceiver 702 may further include a wireless communication component which may include a wireless communication chip and a radio frequency antenna. The transceiver 702 is configured to perform the receiving and sending operations in the foregoing method embodiments.

The memory 703 may be coupled to the processor 701 and the transceiver 702.

The memory 703 may be configured to store a computer program executed by the processor. The processor 701 is configured to execute the computer program to implement various operations executed by the first device or the second device in the foregoing method embodiments.

In addition, the memory 703 may be implemented by any type of transitory storage device or non-transitory storage device or a combination thereof. The transitory storage device or non-transitory storage device includes, but is not limited to, a magnetic disk or an optical disk, an electrically erasable programmable read-only memory, an erasable programmable read-only memory, a static random-access memory, a read-only memory (ROM), a magnetic memory, a flash memory, and a programmable read-only memory.

In some embodiments, in a case where the communication device 700 is the first device, the transceiver 702 is configured to send a first message to the second device. The first message contains application model information related to a third device.

In some embodiments, in a case where the communication device 700 is the second device, the transceiver 702 is configured to receive a first message sent by the first device. The first message contains application model information related to a third device.

For details not elaborated in the embodiment, reference can be made to the foregoing embodiments, which will not be repeated herein.

A computer-readable storage medium is further provided in embodiments of the disclosure. The storage medium is configured to store a computer program. The computer program is configured to be executed by a processor of a communication device, so as to implement the foregoing communication method at a first device side or the foregoing communication method at a second device side.

In some embodiments, the computer-readable storage medium may include an ROM, a random-access memory (RAM), a solid state drive (SSD), or an optical disk. The RAM may include a resistance RAM (ReRAM) and a dynamic RAM (DRAM).

A chip is further provided in embodiments of the disclosure. The chip includes a programmable logic circuit and/or program instructions. The chip is configured to, when running on the communication device, implement the foregoing communication method at a first device side or the foregoing communication method at a second device side.

A computer program product is further provided in embodiments of the disclosure. The computer program product includes computer instructions. The computer instructions are stored in a computer-readable storage medium and configured to be read and executed by a processor of a communication device, so as to implement the foregoing communication method at a first device side or the foregoing communication method at a second device side.

It may be understood that, "indication" referred to in embodiments of the disclosure may be a direct indication, may be an indirect indication, or may mean that there is an association. For example, *A* indicates *B* may mean that *A* directly indicates *B,* for instance, *B* can be obtained according to *A*; may mean that *A* indirectly indicates *B,* for instance, *A* indicates *C*, and *B* can be obtained according to *C*; or may mean that that there is an association between *A* and*B*.

In the elaborations of embodiments of the disclosure, the term "correspondence" may mean that there is a direct or indirect correspondence between the two, may mean that there is an association between the two, or may mean a relationship of indicating and being indicated or configuring and being configured, etc.

In some embodiments of the disclosure, the "pre-defined" can be implemented by pre-saving a corresponding code or table in a device (for example, including the terminal device and the network device) or in other manners that can be used for indicating related information, and the disclosure is not limited in this regard. For example, the "pre-defined" may mean defined in a protocol.

In some embodiments of the disclosure, the "protocol" may refer to a communication standard protocol, which may include, for example, an LTE protocol, an NR protocol, and a protocol applied to a future communication system, and the disclosure is not limited in this regard.

The "multiple" referred to herein refers to two or more than two. The "and/or" describes an association between associated objects, which means that there may be three relationships. For example, *A* and/or *B* may mean *A* alone, both *A* and *B* exist, and *B* alone. The character "/" generally indicates that the associated objects are in an "or" relationship.

The "less than" referred to herein may refer to "less than" or "less than or equal to". The "greater than" referred to herein may refer to "greater than" or "greater than or equal to".

In addition, the serial numbers of the steps described herein merely exemplarily illustrate a possible execution order between the steps. In some other embodiments, the foregoing steps may not be executed according to the order of the serial numbers, for example, two steps with different serial numbers are performed simultaneously, or two steps with different serial numbers are performed in an order opposite to that illustrated in the figure, and embodiments of the disclosure are not limited in this regard.

In addition, the embodiments provided herein can be combined arbitrarily to form new embodiments, which shall all fall within the protection scope of the disclosure.

Those skilled in the art may appreciate that, in one or more of the foregoing examples, the functions described in the embodiments of the disclosure may be implemented by hardware, software, firmware, or any combination thereof. When implemented by software, the functions may be stored in a computer-readable medium or transmitted as one or more instructions or codes on a computer-readable medium. The computer-readable medium includes a computer storage medium and a communication medium, where the communication medium includes any medium that facilitates transfer of computer programs from one place to another, and the storage medium may be any usable medium that can be accessed by a general purpose computer or a special purpose computer.

The foregoing elaborations are merely exemplary embodiments of the disclosure, but are not intended to limit the disclosure. Any modification, equivalent replacement, and improvement made within the spirit and principle of the disclosure shall belong to the protection scope of the disclosure.

## Claims

1. A communication method, comprising:
sending, by a first device, a first message to a second device, wherein the first message contains application model information related to a third device.

2. The method of claim 1, wherein the application model information comprises at least one of:
identity information of at least one application model supported by the third device;
identity information of at least one application model corresponding model data of which is stored in the third device;
identity information of at least one application model corresponding model data of which is not stored in the third device;
usage specification information of the at least one application model corresponding model data of which is stored in the third device;
identity information of at least one application model that has been activated for use by the third device; or
activation indication information of the at least one application model corresponding model data of which is stored in the third device, wherein the activation indication information of the at least one application model indicates whether the at least one application model has been activated for use.

3. The method of claim 2, wherein the usage specification information of the at least one application model comprises at least one of:
functionality information of the at least one application model, indicating a function associated with the at least one application model;
scenario information of the at least one application model, indicating a scenario associated with the at least one application model;
usage-range control information of the at least one application model, indicating a usage range of the at least one application model;
an input information set of the at least one application model, indicating a type and/or number of input information of the at least one application model;
an output information set of the at least one application model, indicating a type and/or number of output information of the at least one application model;
input processing information of the at least one application model, indicating a pre-processing manner for the input information of the at least one application model; or
output processing information of the at least one application model, indicating a post-processing manner for the output information of the at least one application model.

4. The method of any one of claims 1 to 3, wherein before sending, by the first device, the first message to the second device, the method further comprises:
receiving, by the first device, a second message sent by the second device, wherein the second message is used to trigger the first device to send the first message.

5. The method of any one of claims 1 to 4, further comprising:
activating and/or deactivating, by the first device based on a first preset condition, an application model corresponding model data of which is stored.

6. The method of claim 5, wherein the first preset condition comprises at least one of:
in a case where a source device of the application model provides the model data of the application model for the first device, the source device indicates to the first device whether the application model is to be activated;
in a case where the source device of the application model provides the model data of the application model for the first device, the application model is in an inactive state by default or the application model is in an active state by default;
in a case where the source device of the application model provides the model data of the application model for the first device, the source device provides an activation condition and/or a deactivation condition associated with the application model for the first device; and in a case where the activation condition is satisfied or the deactivation condition is not satisfied, the first device activates the application model or keeps the application model in the active state, and/or in a case where the deactivation condition is satisfied or the activation condition is not satisfied, the first device deactivates the application model or keeps the application model in the inactive state;
the first device storing the model data of the application model autonomously determines to activate or deactivate the application model; or
the first device receives an activation or deactivation instruction sent by a non-first device to activate or deactivate the application model, wherein
the non-first device is the source device of the application model, or the non-first device is another device other than the source device of the application model and the first device.

7. The method of any one of claims 1 to 6, further comprising:
sending, by the first device, an activation or deactivation instruction to the second device, wherein the activation or deactivation instruction is used to activate or deactivate an application model stored in the second device.

8. The method of any one of claims 1 to 7, further comprising:
deleting, by the first device based on a second preset condition, stored model data of an application model.

9. The method of claim 8, wherein the second preset condition comprises at least one of:
in a case where the first device storing model data of the application model receives a deletion instruction sent by a non-first device, the first device deletes the model data of the application model;
in a case where a deletion condition associated with the application model is satisfied, the first device deletes the model data of the application model, wherein the deletion condition is configured by the non-first device; or
the first device storing the model data of the application model autonomously determines to delete the model data of the application model, wherein
the non-first device is a source device of the application model, or the non-first device is another device other than the source device of the application model and the first device.

10. The method of any one of claims 1 to 9, further comprising:
sending, by the first device, a deletion instruction to the second device, wherein the deletion instruction is used to delete model data of an application model stored in the second device.

11. The method of any one of claims 1 to 10, further comprising:
sending, by the first device, assistance information to the second device, wherein the assistance information comprises at least one of:
identity information of at least one application model expected by the first device to be activated;
identity information of at least one application model expected by the first device to be deactivated; or
identity information of at least one application model expected by the first device to be deleted.

12. The method of any one of claims 1 to 11, wherein after the first device is shut down or deregistered or deactivated or dormant, the first device performs any one of the following behaviors:
not deleting stored model data of an application model;
deactivating a stored application model but not deleting the stored model data of the application model;
deleting the stored model data of the application model;
not deleting model data of an application model that satisfies a storage condition and deleting model data of an application model that does not satisfy the storage condition;
determining, according to indication information associated with the stored application model, to delete or not delete model data of the application model; and
determining, according to a default rule, an application model to be deleted and/or an application model to be stored.

13. The method of any one of claims 1 to 12, further comprising:
receiving, by the first device, first indication information sent by the second device, wherein the first indication information indicates at least one of the following meanings:
whether the first device is allowed to send to the second device the application model information related to the third device;
whether the first device is allowed to autonomously determine to activate and/or deactivate an application model;
whether the first device is allowed to autonomously determine to delete model data of the application model; or
whether the first device is allowed to send assistance information to the second device.

14. The method of any one of claims 1 to 13, further comprising:
sending, by the first device, second indication information to the second device, wherein the second indication information indicates at least one of the following meanings:
whether the first device has a willingness or capability to provide the application model information related to the third device for the second device;
whether the first device has a capability to autonomously determine to activate and/or deactivate an application model;
whether the first device has a capability to autonomously determine to delete model data of the application model; or
whether the first device has a willingness or capability to provide assistance information for the second device.

15. The method of any one of claims 1 to 14, wherein model data of an application model is transferred between the first device and a source device of the application model, in a case where at least one of the following cases is satisfied:
the source device of the application model deploys the application model to the first device;
the source device of the application model actively updates or modifies model data of the application model stored in the first device;
the first device requests the source device of the application model to update or modify the model data of the application model stored in the first device;
the first device requests the source device of the application model to download the model data of the application model; or
the first device requests the source device of the application model to upload the model data of the application model.

16. The method of any one of claims 1 to 15, wherein the first device is a first terminal device, the second device is a network device or a second terminal device, and the first terminal device and the second terminal device are different terminal devices.

17. The method of any one of claims 1 to 15, wherein the first device is a first network device, the second device is a second network device or a terminal device, and the first network device and the second network device are different network devices.

18. The method of claim 16 or 17, wherein the network device is at least one of: an access-network device, a core-network device, an application-model management control device, or an operation administration and maintenance (OAM) device.

19. The method of any one of claims 1 to 18, wherein the third device is a first terminal device.

20. The method of any one of claims 1 to 19, wherein an application model comprises at least one of: an artificial intelligence (AI) model, a machine learning (ML) model, a supercomputing model, a neuron-like model, an authentication model, an encryption and decryption model, or a self-optimization model.

21. A communication method, comprising:
receiving, by a second device, a first message sent by a first device, wherein the first message contains application model information related to a third device.

22. The method of claim 21, wherein the application model information comprises at least one of:
identity information of at least one application model supported by the third device;
identity information of at least one application model corresponding model data of which is stored in the third device;
identity information of at least one application model corresponding model data of which is not stored in the third device;
usage specification information of the at least one application model corresponding model data of which is stored in the third device;
identity information of at least one application model that has been activated for use by the third device; or
activation indication information of the at least one application model corresponding model data of which is stored in the third device, wherein the activation indication information of the at least one application model indicates whether the at least one application model has been activated for use.

23. The method of claim 22, wherein the usage specification information of the at least one application model comprises at least one of:
functionality information of the at least one application model, indicating a function associated with the at least one application model;
scenario information of the at least one application model, indicating a scenario associated with the at least one application model;
usage-range control information of the at least one application model, indicating a usage range of the at least one application model;
an input information set of the at least one application model, indicating a type and/or number of input information of the at least one application model;
an output information set of the at least one application model, indicating a type and/or number of output information of the at least one application model;
input processing information of the at least one application model, indicating a pre-processing manner for the input information of the at least one application model; or
output processing information of the at least one application model, indicating a post-processing manner for the output information of the at least one application model.

24. The method of any one of claims 21 to 23, wherein before receiving, by the second device, the first message sent by the first device, the method further comprises:
sending, by the second device, a second message to the first device, wherein the second message is used to trigger the first device to send the first message.

25. The method of any one of claims 21 to 24, further comprising:
sending, by the second device, an activation or deactivation instruction to the first device, wherein the activation or deactivation instruction is used to activate or deactivate an application model stored in the first device; and/or
sending, by the second device, configuration information of an activation condition and/or a deactivation condition to the first device, wherein the activation condition and/or the deactivation condition are used to activate or deactivate the application model stored in the first device.

26. The method of any one of claims 21 to 25, further comprising:
receiving, by the second device, an activation or deactivation instruction sent by the first device, wherein the activation or deactivation instruction is used to activate or deactivate an application model stored in the second device.

27. The method of any one of claims 21 to 26, further comprising:
sending, by the second device, a deletion instruction to the first device, wherein the deletion instruction is used to delete model data of an application model stored in the first device; and/or
sending, by the second device, configuration information of a deletion condition to the first device, wherein the deletion condition is used to delete the model data of the application model stored in the first device.

28. The method of any one of claims 21 to 27, further comprising:
receiving, by the second device, a deletion instruction sent by the first device, wherein the deletion instruction is used to delete model data of an application model stored in the second device.

29. The method of any one of claims 21 to 28, further comprising:
receiving, by the second device, assistance information sent by the first device, wherein the assistance information comprises at least one of:
identity information of at least one application model expected by the first device to be activated;
identity information of at least one application model expected by the first device to be deactivated; or
identity information of at least one application model expected by the first device to be deleted.

30. The method of any one of claims 21 to 29, further comprising:
sending, by the second device, first indication information to the first device, wherein the first indication information indicates at least one of the following meanings:
whether the first device is allowed to send to the second device the application model information related to the third device;
whether the first device is allowed to autonomously determine to activate and/or deactivate an application model;
whether the first device is allowed to autonomously determine to delete model data of the application model; or
whether the first device is allowed to send assistance information to the second device.

31. The method of any one of claims 21 to 30, further comprising:
receiving, by the second device, second indication information sent by the first device, wherein the second indication information indicates at least one of the following meanings:
whether the first device has a willingness or capability to provide the application model information related to the third device for the second device;
whether the first device has a capability to autonomously determine to activate and/or deactivate an application model;
whether the first device has a capability to autonomously determine to delete model data of the application model; or
whether the first device has a willingness or capability to provide assistance information for the second device.

32. The method of any one of claims 21 to 31, wherein the first device is a first terminal device, the second device is a network device or a second terminal device, and the first terminal device and the second terminal device are different terminal devices.

33. The method of any one of claims 21 to 31, wherein the first device is a first network device, the second device is a second network device or a terminal device, and the first network device and the second network device are different network devices.

34. The method of claim 32 or 33, wherein the network device is at least one of: an access-network device, a core-network device, an application-model management control device, or an operation administration and maintenance (OAM) device.

35. The method of any one of claims 21 to 34, wherein the third device is a first terminal device.

36. The method of any one of claims 21 to 35, wherein an application model comprises at least one of: an artificial intelligence (AI) model, a machine learning (ML) model, a supercomputing model, a neuron-like model, an authentication model, an encryption and decryption model, or a self-optimization model.

37. A communication apparatus, disposed in a first device and comprising:
a sending module configured to send a first message to a second device, wherein the first message contains application model information related to a third device.

38. The apparatus of claim 37, wherein the application model information comprises at least one of:
identity information of at least one application model supported by the third device;
identity information of at least one application model corresponding model data of which is stored in the third device;
identity information of at least one application model corresponding model data of which is not stored in the third device;
usage specification information of the at least one application model corresponding model data of which is stored in the third device;
identity information of at least one application model that has been activated for use by the third device; or
activation indication information of the at least one application model corresponding model data of which is stored in the third device, wherein the activation indication information of the at least one application model indicates whether the at least one application model has been activated for use.

39. The apparatus of claim 38, wherein the usage specification information of the at least one application model comprises at least one of:
functionality information of the at least one application model, indicating a function associated with the at least one application model;
scenario information of the at least one application model, indicating a scenario associated with the at least one application model;
usage-range control information of the at least one application model, indicating a usage range of the at least one application model;
an input information set of the at least one application model, indicating a type and/or number of input information of the at least one application model;
an output information set of the at least one application model, indicating a type and/or number of output information of the at least one application model;
input processing information of the at least one application model, indicating a preprocessing manner for the input information of the at least one application model; or
output processing information of the at least one application model, indicating a post-processing manner for the output information of the at least one application model.

40. The apparatus of any one of claims 37 to 39, further comprising:
a receiving module configured to receive a second message sent by the second device, wherein the second message is used to trigger the first device to send the first message.

41. The apparatus of any one of claims 37 to 40, further comprising:
an activating module configured to activate and/or deactivate, based on a first preset condition, an application model corresponding model data of which is stored.

42. The apparatus of claim 41, wherein the first preset condition comprises at least one of:
in a case where a source device of the application model provides the model data of the application model for the first device, the source device indicates to the first device whether the application model is to be activated;
in a case where the source device of the application model provides the model data of the application model for the first device, the application model is in an inactive state by default or the application model is in an active state by default;
in a case where the source device of the application model provides the model data of the application model for the first device, the source device provides an activation condition and/or a deactivation condition associated with the application model for the first device; and in a case where the activation condition is satisfied or the deactivation condition is not satisfied, the first device activates the application model or keeps the application model in the active state, and/or in a case where the deactivation condition is satisfied or the activation condition is not satisfied, the first device deactivates the application model or keeps the application model in the inactive state;
the first device storing the model data of the application model autonomously determines to activate or deactivate the application model; or
the first device receives an activation or deactivation instruction sent by a non-first device to activate or deactivate the application model, wherein
the non-first device is the source device of the application model, or the non-first device is another device other than the source device of the application model and the first device.

43. The apparatus of any one of claims 37 to 42, wherein
the sending module is further configured to send an activation or deactivation instruction to the second device, wherein the activation or deactivation instruction is used to activate or deactivate an application model stored in the second device.

44. The apparatus of any one of claims 37 to 43, further comprising:
a deleting module configured to delete, based on a second preset condition, stored model data of an application model.

45. The apparatus of claim 44, wherein the second preset condition comprises at least one of:
in a case where the first device storing model data of the application model receives a deletion instruction sent by a non-first device, the first device deletes the model data of the application model;
in a case where a deletion condition associated with the application model is satisfied, the first device deletes the model data of the application model, wherein the deletion condition is configured by the non-first device; or
the first device storing the model data of the application model autonomously determines to delete the model data of the application model, wherein
the non-first device is a source device of the application model, or the non-first device is another device other than the source device of the application model and the first device.

46. The apparatus of any one of claims 37 to 45, wherein
the sending module is further configured to send a deletion instruction to the second device, wherein the deletion instruction is used to delete model data of an application model stored in the second device.

47. The apparatus of any one of claims 37 to 46, wherein
the sending module is further configured to send assistance information to the second device, wherein the assistance information comprises at least one of:
identity information of at least one application model expected by the first device to be activated;
identity information of at least one application model expected by the first device to be deactivated; or
identity information of at least one application model expected by the first device to be deleted.

48. The apparatus of any one of claims 37 to 47, wherein after the first device is shut down or deregistered or deactivated or dormant, the first device performs any one of the following behaviors:
not deleting stored model data of an application model;
deactivating a stored application model but not deleting the stored model data of the application model;
deleting the stored model data of the application model;
not deleting model data of an application model that satisfies a storage condition and deleting model data of an application model that does not satisfy the storage condition;
determining, according to indication information associated with the stored application model, to delete or not delete model data of the application model; and
determining, according to a default rule, an application model to be deleted and/or an application model to be stored.

49. The apparatus of any one of claims 37 to 48, further comprising:
a receiving module configured to receive first indication information sent by the second device, wherein the first indication information indicates at least one of the following meanings:
whether the first device is allowed to send to the second device the application model information related to the third device;
whether the first device is allowed to autonomously determine to activate and/or deactivate an application model;
whether the first device is allowed to autonomously determine to delete model data of the application model; or
whether the first device is allowed to send assistance information to the second device.

50. The apparatus of any one of claims 37 to 49, wherein
the sending module is further configured to send second indication information to the second device, wherein the second indication information indicates at least one of the following meanings:
whether the first device has a willingness or capability to provide the application model information related to the third device for the second device;
whether the first device has a capability to autonomously determine to activate and/or deactivate an application model;
whether the first device has a capability to autonomously determine to delete model data of the application model; or
whether the first device has a willingness or capability to provide assistance information for the second device.

51. The apparatus of any one of claims 37 to 50, wherein model data of an application model is transferred between the first device and a source device of the application model, in a case where at least one of the following cases is satisfied:
the source device of the application model deploys the application model to the first device;
the source device of the application model actively updates or modifies model data of the application model stored in the first device;
the first device requests the source device of the application model to update or modify the model data of the application model stored in the first device;
the first device requests the source device of the application model to download the model data of the application model; or
the first device requests the source device of the application model to upload the model data of the application model.

52. The apparatus of any one of claims 37 to 51, wherein the first device is a first terminal device, the second device is a network device or a second terminal device, and the first terminal device and the second terminal device are different terminal devices.

53. The apparatus of any one of claims 37 to 51, wherein the first device is a first network device, the second device is a second network device or a terminal device, and the first network device and the second network device are different network devices.

54. The apparatus of claim 52 or 53, wherein the network device is at least one of: an access-network device, a core-network device, an application-model management control device, or an operation administration and maintenance (OAM) device.

55. The apparatus of any one of claims 37 to 54, wherein the third device is a first terminal device.

56. The apparatus of any one of claims 37 to 55, wherein an application model comprises at least one of: an artificial intelligence (AI) model, a machine learning (ML) model, a supercomputing model, a neuron-like model, an authentication model, an encryption and decryption model, or a self-optimization model.

57. A communication apparatus, disposed in a second device and comprising:
a receiving module configured to receive a first message sent by a first device, wherein the first message contains application model information related to a third device.

58. The apparatus of claim 57, wherein the application model information comprises at least one of:
identity information of at least one application model supported by the third device;
identity information of at least one application model corresponding model data of which is stored in the third device;
identity information of at least one application model corresponding model data of which is not stored in the third device;
usage specification information of the at least one application model corresponding model data of which is stored in the third device;
identity information of at least one application model that has been activated for use by the third device; or
activation indication information of the at least one application model corresponding model data of which is stored in the third device, wherein the activation indication information of the at least one application model indicates whether the at least one application model has been activated for use.

59. The apparatus of claim 58, wherein the usage specification information of the at least one application model comprises at least one of:
functionality information of the at least one application model, indicating a function associated with the at least one application model;
scenario information of the at least one application model, indicating a scenario associated with the at least one application model;
usage-range control information of the at least one application model, indicating a usage range of the at least one application model;
an input information set of the at least one application model, indicating a type and/or number of input information of the at least one application model;
an output information set of the at least one application model, indicating a type and/or number of output information of the at least one application model;
input processing information of the at least one application model, indicating a preprocessing manner for the input information of the at least one application model; or
output processing information of the at least one application model, indicating a post-processing manner for the output information of the at least one application model.

60. The apparatus of any one of claims 57 to 59, further comprising:
a sending module configured to send a second message to the first device, wherein the second message is used to trigger the first device to send the first message.

61. The apparatus of any one of claims 57 to 60, further comprising a sending module, wherein the sending module is configured to:
send an activation or deactivation instruction to the first device, wherein the activation or deactivation instruction is used to activate or deactivate an application model stored in the first device; and/or
send configuration information of an activation condition and/or a deactivation condition to the first device, wherein the activation condition and/or the deactivation condition are used to activate or deactivate the application model stored in the first device.

62. The apparatus of any one of claims 57 to 61, wherein
the receiving module is further configured to receive an activation or deactivation instruction sent by the first device, wherein the activation or deactivation instruction is used to activate or deactivate an application model stored in the second device.

63. The apparatus of any one of claims 57 to 62, further comprising a sending module, wherein the sending module is configured to:
send a deletion instruction to the first device, wherein the deletion instruction is used to delete model data of an application model stored in the first device; and/or
send configuration information of a deletion condition to the first device, wherein the deletion condition is used to delete the model data of the application model stored in the first device.

64. The apparatus of any one of claims 57 to 63, wherein
the receiving module is further configured to receive a deletion instruction sent by the first device, wherein the deletion instruction is used to delete model data of an application model stored in the second device.

65. The apparatus of any one of claims 57 to 64, wherein
the receiving module is further configured to receive assistance information sent by the first device, wherein the assistance information comprises at least one of:
identity information of at least one application model expected by the first device to be activated;
identity information of at least one application model expected by the first device to be deactivated; or
identity information of at least one application model expected by the first device to be deleted.

66. The apparatus of any one of claims 57 to 65, further comprising:
a sending module configured to send first indication information to the first device, wherein the first indication information indicates at least one of the following meanings:
whether the first device is allowed to send to the second device the application model information related to the third device;
whether the first device is allowed to autonomously determine to activate and/or deactivate an application model;
whether the first device is allowed to autonomously determine to delete model data of the application model; or
whether the first device is allowed to send assistance information to the second device.

67. The apparatus of any one of claims 57 to 66, wherein
the receiving module is further configured to receive second indication information sent by the first device, wherein the second indication information indicates at least one of the following meanings:
whether the first device has a willingness or capability to provide the application model information related to the third device for the second device;
whether the first device has a capability to autonomously determine to activate and/or deactivate an application model;
whether the first device has a capability to autonomously determine to delete model data of the application model; or
whether the first device has a willingness or capability to provide assistance information for the second device.

68. The apparatus of any one of claims 57 to 67, wherein the first device is a first terminal device, the second device is a network device or a second terminal device, and the first terminal device and the second terminal device are different terminal devices.

69. The apparatus of any one of claims 57 to 67, wherein the first device is a first network device, the second device is a second network device or a terminal device, and the first network device and the second network device are different network devices.

70. The apparatus of claim 68 or 69, wherein the network device is at least one of: an access-network device, a core-network device, an application-model management control device, or an operation administration and maintenance (OAM) device.

71. The apparatus of any one of claims 57 to 70, wherein the third device is a first terminal device.

72. The apparatus of any one of claims 57 to 71, wherein an application model comprises at least one of: an artificial intelligence (AI) model, a machine learning (ML) model, a supercomputing model, a neuron-like model, an authentication model, an encryption and decryption model, or a self-optimization model.

73. A communication device, comprising:
a memory configured to store a computer program, and
a processor configured to execute the computer program to implement the method of any one of claims 1 to 20 or the method of any one of claims 21 to 36.

74. A computer-readable storage medium configured to store a computer program, wherein the computer program is configured to be executed by a processor to implement the method of any one of claims 1 to 20 or the method of any one of claims 21 to 36.

75. A chip, comprising a programmable logic circuit and/or program instructions and being configured to, when running, implement the method of any one of claims 1 to 20 or the method of any one of claims 21 to 36.

76. A computer program product, comprising computer instructions, wherein the computer instructions are stored in a computer-readable storage medium and configured to be read and executed by a processor from the computer-readable storage medium to implement the method of any one of claims 1 to 20 or the method of any one of claims 21 to 36.
